# EUROPÄISCHE PATENTANMELDUNG

(11) **EP 0 959 546 A1**
(43) Veröffentlichungstag der Anmeldung: **24.11.1999**
(21) Anmeldenummer: 99109841.9
(22) Anmeldetag: 19.05.1999
(51) Int. Cl.: H02G 5/00, H02G 5/06, H01R 4/62

(54) **Flexibler Hochstromverbinder**

(30) Priorität: 22.05.1998 CH 112198
(71) Anmelder: CELLPACK AG, CH-5610 Wohlen (CH); ABB Industrie AG, 5401 Baden (CH)
(72) Erfinder: Kutil, Alexander, 5404 Baden (CH); Werninger, Johannes, 8008 Züurich (CH)
(74) Vertreter: Blum, Rudolf Emil Ernst

(57) **Zusammenfassung**

Zur Vermeidung von starken Schwingungen und einem daraus resultierenden Reissen oder Brechen von flexiblen Hochstromverbindern werden diese mit einer dehnfähigen, flexiblen aber schwingungsdämpfenden Auflage (12) versehen, welche den Hochstromverbinder (1) weitgehend ummantelt.

## Beschreibung

Die Erfindung betrifft einen flexiblen Hochstromverbinder gemäss Oberbegriff des Anspruchs 1, eine aus solchen Hochstromverbindern gebildete Hochstromverbindung gemäss Oberbegriff des Anspruchs 8 oder 9 sowie ein Verfahren zur Herstellung eines flexiblen Hochstromverbinders gemäss Oberbegriff des Anspruchs 10.

Flexible Hochstromverbinder zur Übertragung hoher Ströme von mehreren Tausend Ampere sind bekannt. Solche Hochstromverbinder werden auch in Paketen zur Bildung einer Hochstromverbindung parallelgeschaltet, wobei dies übereinanderliegend oder nebeneinanderliegend erfolgen kann.

Eine bekannte Ausführungsform eines Hochstromverbinders weist einen flexiblen Teil auf, der zwei oder drei Leiterstreifen umfasst, wobei jeder Leiterstreifen aus einer Vielzahl von aufeinanderliegenden Blechen gebildet ist. Die Leiterstreifen sind an jedem Ende mit den plattenförmigen Anschlussflächen verschweisst. Andere Ausführungsformen sind mit einem metallischen Geflecht zur Bildung des flexiblen Teils ausgestattet.

Die flexiblen Hochstromverbinder sind hohen wechselnden Stromkräften ausgesetzt, was Schwingungen hervorruft, und sie müssen auch anlagebedingte Schwingungen aufnehmen können. In der Praxis zeigt sich, dass die Schwingungen zu einem Reissen oder Brechen der Schweissverbindung zwischen flexiblem Teil und den Anschlussflächen führen kann. Dies wird ferner begünstigt durch ein Auffächern der einzelnen Blechbänder und eine Verformung der in der Regel gekrümmten flexiblen Leiterstreifen durch die Stromkräfte. Es ist versucht worden, dagegen durch Versteifungsbleche Abhilfe zu schaffen, welche die Schweissnaht und die angrenzenden Gebiete des flexiblen Teils und der Anschlussplatten abdecken. Indes kann trotz dieser im wesentlichen starren Versteifungsbleche, die an der Schweissstelle einen Knickschutz bilden, ein Reissen oder Brechen aufgrund der genannten Schwingungen auftreten, wobei lediglich der Ort des Schadensereignisses von der Schweissstelle zum Endbereich des Versteifungsbleches über dem flexiblen Leiterteil verlegt wird.

Der Erfindung liegt daher die Aufgabe zugrunde, einen flexiblen Hochstromverbinder zu schaffen, der diese Nachteile nicht aufweist.

Dies wird bei einem Hochstromverbinder der eingangs genannten Art durch die kennzeichnenden Merkmale des Anspruchs 1 erreicht.

Dadurch, dass mindestens ein Abschnitt des flexiblen Leiterteils mit einer flexiblen Auflage versehen wird, also einer Auflage aus einem Material, das die notwendigen Dehnungen des flexiblen Leiterteils weiterhin ermöglicht und diesen folgen kann, wird es möglich, ein Auffächern der einzelnen Bleche zu vermeiden und auch eine Verformung des Blechpaketes zu vermeiden oder zu verringern und zusätzlich einen Knickschutz für das Blechmaterial oder das metallene Gewebe des flexiblen Leiterteils zu schaffen, so dass die genannten Schäden vermieden werden können. Ferner kann die Auflage eine mechanische Verstärkung des Hochstromverbinders bewirken, ohne dessen Flexibilität beim Einbau zwischen Anlageteilen und damit dessen Anwendungsmöglichkeiten zu beeinträchtigen.

Vorzugsweise ist die Auflage ferner schwingungsdämpfend, so dass auch die zu Schäden führenden Schwingungen reduziert oder ganz vermieden werden können.

Bevorzugterweise erstreckt sich die Auflage auch über einen Abschnitt der Anschlussflächen. Ferner ist es bevorzugt, wenn die Auflage in Form einer Ummantelung ausgeführt ist, insbesondere als eine Ummantelung aus Silikon.

Der Erfindung liegt ferner die Aufgabe zugrunde, eine Hochstromverbindung mit mehreren Hochstromverbindern bezüglich der genannten Nachteile zu verbessern. Dies wird durch die kennzeichnenden Merkmale des Anspruchs 8 oder des Anspruchs 9 erreicht.

Berühren sich mehrere separate Auflagen, so wird eine grössere mechanische Festigkeit und eine erhöhte Schwingungsdämpfung erzielt. Ebenfalls möglich und vorteilhaft ist eine Auflage, welche mehreren Hochstromverbindern gemeinsam ist und damit ebenfalls eine versteifende und dämpfende Kopplung bildet.

Weiter liegt der Erfindung die Aufgabe zugrunde, ein Verfahren zur Herstellung eines flexiblen Hochstromverbinders zu schaffen, was durch die kennzeichnenden Merkmale des Anspruchs 10 erfolgt.

Im folgenden werden Ausführungsbeispiele der Erfindung anhand der Figuren näher erläutert. Dabei zeigt
Figur 1 eine Draufsicht auf einen Hochstromverbinder;
Figur 2 eine Seitenansicht eines Hochstromverbinders gemäss einer ersten Ausführungsform der Erfindung;
Figur 3 eine Seitenansicht gemäss einer weiteren Ausführungsform der Erfindung;
Figur 4 eine Seitenansicht einer mit mehreren Hochstromverbindern geschaffenen Hochstromverbindung; und
Figur 5 ebenfalls eine Hochstromverbindung.

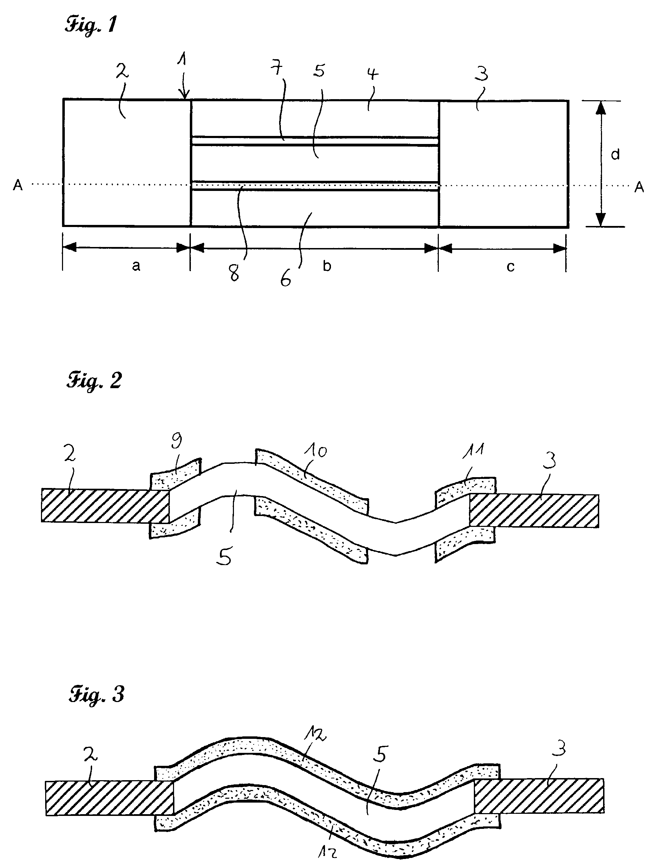

Figur 1 zeigt eine Draufsicht auf eine Ausführungsbeispiel eines flexiblen Hochstromverbinders 1 noch ohne die erfindungsgemässe Auflage. Der Hochstromverbinder weist Anschlussplatten 2, 3 auf, welche durch flexible Leiterstreifen 4, 5 und 6 verbunden sind. Die flexiblen Leiterstreifen sind voneinander durch einen Abstand 7 und 8 getrennt. Die Leiterstreifen sind mit den plattenförmigen Anschlussflächen 2, 3 durch Schweissung verbunden. Als Beispiel für eine Dimensionierung des Hochstromverbinders kann die Länge a bzw. c einer Anschlussplatte mit 300 mm, die Länge b der flexiblen Leiterstreifen mit 400 mm und die Breite e des Hochstromverbinders mit 300 mm angegeben werden. Natürlich sind diese Masse nur als Beispiele zu verstehen. Ebenso kann eine andere Anzahl von Leiterstreifen zwischen den Anschlussplatten angeordnet sein als die drei gezeigten Streifen. Bei einem bekannten Hochstromverbinder sind die Leiterstreifen jeweils aus 40 Stück aufeinanderliegenden Aluminiumblechen mit je 0,5 mm Dicke gebildet und werden somit als 20 mm dicke Pakete an die Anschlussflächen geschweisst. Diese bestehen z.B. auch aus Aluminium von 20 mm Dicke. Die Leiterstreifen weisen üblicherweise mindestens eine Krümmung auf, wie in der Seitenansicht von Figur 2 ersichtlich, welche einen Schnitt entlang der Linie A-A von Figur 1 darstellt, wobei die Dicke des Hochstromverbinders in Figur 2 im Vergleich zur Länge übertrieben dargestellt ist. Die Leiterstreifen weisen z.B. in ungekrümmter Form eine Länge von 440 mm auf und werden nachfolgend in die in Figur 2 gezeigte liegende S-Form gestaucht. Natürlich sind auch andere Formgebungen möglich, welche die Funktion als flexibler Hochstromverbinder durch die entsprechende Flexibilität der Leiterstreifen ermöglicht. Es ist weiter bekannt, anstelle der aus einer Vielzahl von Einzelblechen zusammengesetzten Leiterstreifen auch ein Metallgeflecht als flexiblen Leiter des Hochstromverbinders einzusetzen. Die beschriebenen Hochstromverbinder leiten als Stromverbinder elektrische Ströme von einigen kA und werden auch zu Paketen zusammengefasst, welche dann eine Hochstromverbindung schaffen, die einige 10 kA leiten kann. Solche Hochstromverbindungen werden nachfolgend noch dargestellt. Wie bereits erläutert, können durch die hohen Stromkräfte erzeugte Auslenkungen, Verformungen und Schwingungen zu Problemen bei den Schweissverbindungen führen. So können z.B. die äussersten Bleche jedes Leiterstreifens mit einer Amplitude von ca. 3 cm bei einer Frequenz von ca. 4 Hz schwingen. Dabei können insbesondere die äusseren Bleche brechen und die Schweissverbindung kann reissen oder ebenfalls brechen. Auch bei den Hochstromverbindern mit Metallgeflecht treten entsprechende Effekte auf.

Figur 2 zeigt nun in schematischer Form Ausführungsformen gemäss der Erfindung, welche die genannten Effekte mildern oder ganz vermeiden können. Dabei sind vom flexiblen Blechpaket 5 in dessen Seitenansicht nur die beiden äussersten Bleche dargestellt und die anderen Bleche nicht gezeigt. Die Auflagen sind, wie die Anschlussplatten, im Schnitt gezeigt. In Figur 2 ist eine erste Auflage 9 gezeigt, welche den Verbindungsbereich zwischen der Anschlussfläche 2 und den flexiblen Leitern in Form einer Ummantelung umgibt. Diese Ummantelung ist aus einem flexiblen Material ausgeführt, so dass die notwendige Flexibilität der Leiterstreifen nicht beeinträchtigt wird. Die Ummantelung sorgt aber vorzugsweise auch für eine Dämpfung der Schwingungen. Zu diesem Zweck ist die Ummantelung aus einem flexiblen, also dehnfähigen Material hergestellt, welches vorzugsweise auch Dämpfungseigenschaften aufweist. Ein bevorzugtes solches Material ist eine handelsübliche bekannte Silikonmasse oder eine andere Kunststoffmasse mit den entsprechenden Eigenschaften oder auch Naturkautschuk. Auch eine Ummantelung mit einem Gewebeklebeband oder mit einem selbstvulkanisierenden Band ist möglich. Die Ummantelung kann bei den genannten Beispielen eine Dicke von 1 cm aufweisen. Die Dicke kann aber in einem weiten Bereich von z.B. 0,1 cm bis 2 cm oder mehr gewählt werden. Vorteilhafterweise weist die Auflage auf dem Hochstromverbinder 1 noch weitere Teile 10, 11 auf, welche vom Material und der Dicke her auf identische Weise wie der Auflageteil 9 ausgestaltet sein können oder auch auf andere Weise. Auch hier handelt es sich aber um flexible, d.h. dehnungsfähige Teile, die vorzugsweise auch eine dämpfende Wirkung auf die Leiterstreifen aufweisen. Die Breite der Auflagen, z.B. der Auflage 10, kann von einem schmalen Streifen von z.B. 1 cm Breite oder weniger bis zu einer Breite gewählt werden, die der Länge des ganzen flexiblen Teils und teilweise der Anschlussplatten entspricht.

Die Figur 3 zeigt eine weitere bevorzugte Ausführungsform, bei welcher der gesamte flexible Leiterbereich und ein Teil der Anschlussflächen 2, 3 mit einer einstückig ausgeführten Ummantelung 12 versehen sind. Bei dieser Ausführungsform wird bevorzugterweise eine Ummantelung mit Silikon vorgenommen, welches z.B. ein handelsübliches Silikonmaterial vom Typ RTV, HTV oder LSR ist. Zur Herstellung dieser Ausführungsform kann der Hochstromverbinder in eine Form eingelegt werden, in welche die Silikonmasse in flüssiger Form eingebracht wird und aus welcher der Hochstromverbinder nach dem Erstarren der Silikonmasse entformt wird. Die Ummantelung 12 bildet eine durchgehende dehnungsfähige und dämpfende Schicht um die gezeigten Bereiche des Hochstromverbinders. Die Dicke der Ummantelung 12 kann dabei z.B. in einem Bereich von 0,5 bis 2 cm liegen, bevorzugterweise aber ebenfalls 1 cm betragen. Es ergibt sich eine völlige Ummantelung des Hochstromverbinders, bei welcher die Zwischenräume 7 und 8 (Figur 1) ebenfalls mit Silikon ausgefüllt sind und in der Draufsicht nicht mehr erkennbar sind.

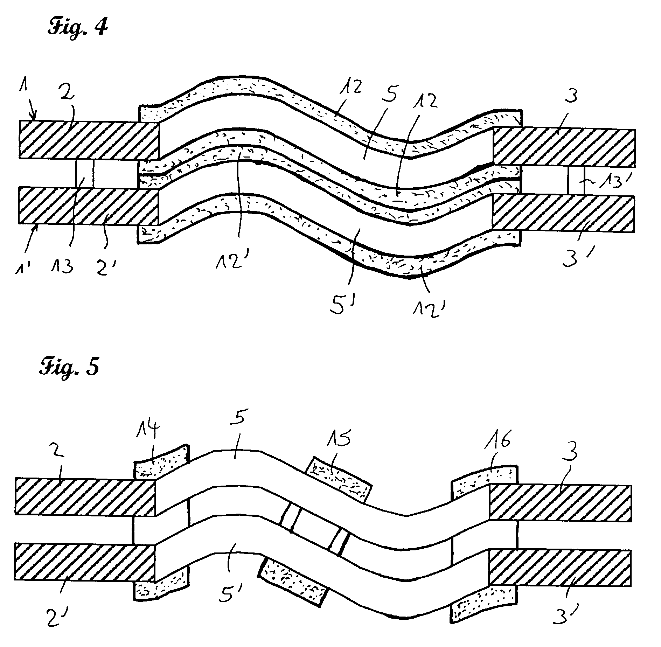

Figur 4 zeigt eine Ausführungsform einer Hochstromverbindung, bei welcher zwei Hochstromverbinder 1 und 1' übereinander beabstandet montiert sind, wobei die bekannten Montageteile nur durch die Blöcke 13, 13' symbolisiert sind. In der Regel erfolgt die Montage der Hochstromverbinder zur Hochstromverbindung mit einem Abstand von 20 mm. Auch in diesem Fall sind die beiden Hochstromverbinder 1 und 1' mit einer Ummantelung 12 und 12' ähnlich derjenigen von Figur 3 versehen. Diese weist die genannte bevorzugte Dicke von 10 mm auf, so dass sich beim üblichen Montageabstand von 20 mm der Hochstromverbinder die Ummantelungen 12 und 12' berühren. Dies ergibt eine weiter verbesserte Dämpfung von Schwingungen und eine erhöhte mechanische Stabilität der Hochstromverbindung.

Figur 5 zeigt eine weitere Ausführungsform mit zwei übereinander montierten Hochstromverbindern (wobei die Montageteile nicht dargestellt sind). Dabei ist die Auflage so ausgestaltet, dass sie wiederum aus mehreren Teilen besteht, wobei hier die Auflage beiden Hochstromverbindern gemeinsam ist. So ist eine gemeinsame Ummantelung 14 sowie 16 jeweils bei der Schweissstelle dargestellt, wobei die Ummantelung wiederum aus einem Kunststoffkörper, z.B. einem Silikonkörper bestehen kann oder auch aus Bändern, welche um die montierten Hochstromverbinder gewickelt sind. Der mittlere Teil 15 der Auflage weist einen Abschnitt auf, der um beide Hochstromverbinder 1 und 1' herum verläuft, so wie einen Teil 17, der als Einlage zwischen die Hochstromverbinder 1 und 1' geschoben ist. Auch hier könnte natürlich die gemeinsame Ummantelung als eine die Hochstromverbindung (bis auf die zur elektrischen Verbindung notwendigerweise frei bleibenden Anschlussflächenabschnitte) vollständig umgebende Ummantelung ausgeführt sein und der Auflageteil 17 könnte sich ebenfalls im wesentlichen über den ganzen Bereich erstrecken, der auch von der Ummantelung überdeckt wird.

Anstelle der gezeigten Ummantelungen, die als Kunststofformkörper ausgeführt oder mit Umwickeln durch Bänder erzeugt werden, können auch Formstücke aus einem dehnfähigen und vorzugsweise schwingungsdämpfenden Material auf die Hochstromverbinder aufgeklebt werden. Das dehnfähige und/oder schwingungsdämpfende Material kann auch ein elektrisch leitendes Material sein, besteht aber bevorzugterweise aus einem Kunststoffmaterial, insbesondere Silikon. Zusätzlich zu den gezeigten Auflagen kann im Schweissnahtbereich unterhalb derselben die an sich bekannte Verstärkung aus einem im wesentlichen starren Blechabschnitt angeordnet werden.

## Patentansprüche

1. Flexibler Hochstromverbinder (1, 1') umfassend beidseits eines flexiblen Teils (4,5,6) befestigte Anschlussflächen (2, 3), dadurch gekennzeichnet, dass mindestens ein Abschnitt des flexiblen Teils mit mindestens einer flexiblen Auflage (9-12, 12', 14-16) versehen ist.

2. Flexibler Hochstromverbinder nach Anspruch 1, dadurch gekennzeichnet, dass die Auflage eine schwingungsdämpfende Auflage ist.

3. Flexibler Hochstromverbinder nach Anspruch 1 oder 2, dadurch gekennzeichnet, dass der flexible Teil von mindestens einem Leiterstreifen (4,5,6) gebildet ist, welcher aus mehreren Blechlagen oder einem Metallgeflecht gebildet ist.

4. Flexibler Hochstromverbinder nach einem der Ansprüche 1 bis 3, dadurch gekennzeichnet, dass sich eine Auflage auch über einen Abschnitt der Anschlussflächen erstreckt.

5. Flexibler Hochstromverbinder nach einem der Ansprüche 1 bis 4, dadurch gekennzeichnet, dass die Auflage eine Ummantelung ist.

6. Flexibler Hochstromverbinder nach einem der Ansprüche 1 bis 5, dadurch gekennzeichnet, dass die Auflage aus einem Kunststoffmaterial gebildet ist, oder dass die Auflage aus einem Naturmaterial, insbesondere Naturkautschuk, gebildet ist.

7. Flexibler Hochstromverbinder nach einem der Ansprüche 1 bis 6, dadurch gekennzeichnet, dass die Auflage aus Silikon besteht.

8. Flexible Hochstromverbindung mit mindestens zwei parallel angeordneten flexiblen Hochstromverbindern (1, 1') nach einem der Ansprüche 1 bis 7, dadurch gekennzeichnet, dass die jeweiligen Auflagen (12, 12') einander berühren.

9. Flexible Hochstromverbindung mit mindestens zwei parallel angeordneten Hochstromverbindern (1, 1') nach einem der Ansprüche 1 bis 7, dadurch gekennzeichnet, dass mindestens eine Auflage (14, 15, 16) vorgesehen ist, welche mehreren Hochstromverbindern gemeinsam ist.

10. Verfahren zur Herstellung eines flexiblen Hochstromverbinders, bei dem ein flexibles Mittelteil beidseits an Anschlussflächen befestigt wird, insbesondere durch Schweissung, dadurch gekennzeichnet, dass als weiterer Schritt mindestens eine flexible Auflage mindestens auf einen Abschnitt des flexiblen Teils aufgebracht wird.

11. Verfahren nach Anspruch 10, dadurch gekennzeichnet, dass die Auflage durch Aufgiessen und/oder Umgiessen mit einem Kunststoff, vorzugsweise einem Silikon, aufgebracht wird.

12. Verfahren nach Anspruch 11, dadurch gekennzeichnet, dass der gesamte flexible Teil sowie Abschnitte der Anschlussflächen in eine Form eingelegt und in dieser vollständig mit Kunststoff, vorzugsweise Silikon, umgossen werden.

13. Verfahren nach Anspruch 10, dadurch gekennzeichnet, dass die Auflage durch Umwickeln oder Umbinden mit einem Band gebildet wird.

14. Verfahren nach Anspruch 10, dadurch gekennzeichnet, dass die Auflage durch Aufkleben eines Auflagekörpers gebildet wird.
